# EUROPEAN PATENT APPLICATION

(11) **EP 0 999 036 A1**
(43) Date of publication of application: **10.05.2000**
(21) Application number: 99119873.0
(22) Date of filing: 07.10.1999
(51) Int. Cl.: B29C 67/00

(54) **Light source device and lamination molding method using the same**

(30) Priority: 19.10.1998 JP 29718398
(71) Applicant: TOYOTA JIDOSHA KABUSHIKI KAISHA, Aichi-ken 471-8571 (JP)
(72) Inventor: Otsuka, Yukio, Toyota-shi, Aichi-ken, 471-8571 (JP)
(74) Representative: Winter, Brandl & Partner

(57) **Abstract**

Light source device is provided with a light source (52) having a light radiation characteristic and a light-regulating member (6) which forms a plurality of light-regulating spaces provided on the side on which the light (infrared ray, for example) radiated from the light source (52), thereby increasing the directivity of light radiated therefrom. In the lamination molding method, the solidified layer (16x) is formed by irradiating solidifiable substances with radiation energy from the radiation energy source and then laminating a plurality of solidified layers (16x) in a thickness direction to form a three-dimensional molded article. The radiation energy source is the above-mentioned light source device (52).

## Description

### BACKGROUND OF THE INVENTION

### FIELD OF THE INVENTION

The present invention relates to a light source device capable of radiating light and a lamination molding method using the light source device.

### DESCRIPTION OF THE RELATED ART

Related art will be described herein, using an infrared light source device as an example. The infrared light source device has a long light source extending in one direction or a spot light source. Infrared rays are radiated from either of these light sources. Both light sources radiate light. Therefore, the infrared ray radiated from these light sources tends to scatter more than a laser beam, and thus both lack directivity.

Recently, a lamination molding technique using a laser beam radiation device, which generates a laser beam having high directivity and high energy density, has been developed. This lamination molding technique is used to form a three-dimensional molded article by forming a solidified layer from a solidifiable substance, such as a resin-coated sand, using a laser beam and, then, laminating a plurality of solidified layers together.

A related lamination molding technique which a mask, a radiating solidifiable substance, and a laser beam which radiates the solidificable substance through the mask, is disclosed in Japanese Patent Publication No. HEI 9-136139. With this technique, because the laser beam is radiated through the mask, a solidified layer having a surface shape corresponding to the pattern shape of the light transmitted through the mask can be easily made. This technique has advantages such as an improvement in accuracy of an outline shape of the surface of the solidified layer and improvement in productivity.

The above-mentioned infrared ray light source has a drawback, however, because, as described above, it has a higher light radiation characteristic than the laser beam.

Further, attempts have been made in the recent years to employ the above-mentioned infrared light source device instead of the laser beam radiation device as a radiation energy source. Use of the laser beam has disadvantages: the equipment costs move, and it requires as a laser generator and a scanner. Equipment used in an infrared light source costs less. However, due to its light radiation characteristic, the infrared light source lacks directivity as compared to the laser beam and has a high scattering characteristic. Consequently, the accuracy of the outline shape of the surface of the solidified layer is limited. Even if the mask is used, there still is a limit to how much the outline shape of the surface of the solidified layer can be improved, because the light radiates too much.

When using a mask, the accuracy of the outline is determined by a distance between the mask and the solidified layer and by how much the light scatters. With the laser beam, the outline accuracy of the surface of the solidified layer is high even when the distance between the mask and the solidified layer is large. However, with ordinary light, which has a directivity less than the laser beam's, the distance must be made close to zero. But in general, it is difficult to make the mask and the solidified layer come in contact with each other by making the distance zero.

Although the above description refers to infrared rays, similar circumstances exist for ultraviolet rays.

### SUMMARY OF THE INVENTION

The present invention was made to solve the problems in the related art. An object of the present invention is to provide a light source device for improving the directivity of light and a lamination molding method using the light source device.

The above object is accomplished by combination of features of the independent claim and the dependent claims that disclose further advantageous embodiments of the invention.

A light source device according to the present invention has a light source having light radiation characteristics and a light-regulating member. The light-regulating member has a plurality of light-regulating spaces provided side-by-side between the light source and the solidifyable substance. The light source device is characterized by the directivity of the light radiated from the light source and the solidifyable substance. The directivity is increased by the light-regulating member. Accordingly, the use of the light source device according to the present invention is advantageous for inhibiting scattering of light, e.g., infrared and ultraviolet rays.

The lamination molding method according to the present invention employs the above-mentioned light source device. With this method, a solidifiable substance is radiated with the radiation energy from the radiation energy source to form a solidified layer, and a plurality of solidified layers are laminated in a thickness direction to form a three-dimensional molded article. This method is characterized by having the aforementioned light source device as the radiation energy source. The lamination molding method according to the present invention employs an inexpensive light source device instead of a laser beam device, although the directivity is lower than to the laser beam. Therefore, this method is cheaper.

Further, with the lamination molding method according to the present invention, light, such as an infrared rays, entering diagonally with respect to the solidifiable substance can be restrained. They can be restrained because the light source device is provided with a light-regulating member for directing the light. This improves the accuracy of the outline shape of the solidified layer. Consequently, the method improves the accuracy of the outline shape of the three-dimensional molded article.

Further, when the lamination molding method according to the present invention is used to form a of solidified layer by radiation through a mask, an oblique ray, such as an infrared ray, enters diagonally with respect to the mask it can be restrained because scattering of the light is retrained by the light-regulating member. Therefore, this method improves the transfer accuracy of the mask. Consequently, it improves the accuracy of the outline shape of the solidified layer.

The light source device according to the present invention is provided with a light source having light a radiation characteristic and a light-regulating member having a light-regulating function which is provided between the light source and the mask or solidifiable substance. A linear light source having an elongated shape and being disposed extensively in one direction is one typical light source. In some cases however, the light source may be a spot light source or a ring light source so long as the light source is provided with the light radiation characteristic. Such light sources include an infrared ray light source, an ultraviolet ray light source, and a visible ray light source. The infrared ray includes a far infrared ray.

The light-regulating member is situated on the side on which the light radiation from the light source passes. Thus, the light-regulating member is interposed between the light source and an irradiated article. The light-regulating member forms a plurality of light-regulating spaces which are side-by-side. As shown by a later-described embodiment, it is preferable that the plurality of light-regulating spaces be side-by-side along an extending direction of the light source when the light source has an elongated shape. The light-regulating member may have a plurality of light-regulating plates disposed to form light-regulating spaces between adjacent light-regulating plates. The light-regulating member also may have a plurality of narrow-widthed slits situated side-by-side. The width between light-regulating members may be fixed or variable.

The light-regulating member has high interceptability against rays which enter diagonally with respect to the light-regulating member, while the light-regulating member has high light transmittance against rays radiated along the light-regulating spaces of the light-regulating member. In other words, the light-regulating member has selective transmittance according to the direction of rays. Therefore, the light-regulating member is capable of restraining scattering of rays, and has a function of increasing the directivity. Also, the light-regulating member is effective for uniformalizing the energy density of radiated ray in the longitudinal direction.

In the lamination molding method according to the present invention, a light source having the above-described light-regulating member is used as the radiation energy source for solidifying the solidifiable substance. The light-regulating member is interposed between the light source and the solidifiable substance to be irradiated. Particles such as sand particles coated with thermosetting resin such as a phenolic resin may be used as a typical solidifiable substance. Thermosetting resin is thermally cured by the infrared ray radiated from the infrared light source.

With the lamination molding method according to the present invention, the light source device is an ultraviolet light source, ultraviolet-setting resin may be used as the solidifiable substance. Also, a resin-coated sand coated with ultraviolet-setting resin may be used.

It is preferred that the light source device be provided with a reflecting mirror which functions as a converging portion for converging the light radiated from the light source on the irradiated side. A reflecting mirror the cross section of which is defined by a parabola, may be adopted as a reflecting mirror having a converging function. The longer the focal length, the better the directivity of light. But efficiency is deteriorated if the focal point is ncreased. Therefore, it is preferable that a long focal length be selected within a range where the energy efficiency is not deteriorated.

As shown by an embodiment described later, the reflecting mirror is ordinarily disposed near the light source on a side which faces opposite to the light-regulating member.

It is preferable that the light source device be provided with a plurality of light sources with the light radiated from the sources being converged. It is also preferable that each light of the plurality of light sources be converged on the irradiated side, i.e., in the vicinity of the solidifiable substance. By so doing, the radiation energy density can be increased.

This summary of the invention does not necessarily describe all necessary features so that the invention may also reside in a sub-combination of these described features.

### BRIEF DESCRIPTION OF THE DRAWINGS

Fig. 1 is a sectional view schematically showing an application step;
Fig. 2 is a sectional view schematically showing a radiation step using an infrared light source device;
Fig. 3 is a schematic sectional view of the radiation step in Fig. 2 taken along line III-III;
Fig. 4 is a sectional view schematically showing essential portions in conducting the radiation step using an infrared light source device according to a second embodiment;
Fig. 5 is a sectional view schematically showing essential portions in conducting the radiation step using an infrared light source device having a plurality of infrared sources according to a third embodiment;
Fig. 6 is a sectional view schematically showing essential portions in conducting the radiation step using an infrared light source device having a plurality of infrared sources according to a fourth embodiment; and
Fig. 7 is a plan view schematically showing essential portions in conducting the radiation step using an infrared light source device having a plurality of infrared sources according to a fifth embodiment.

### DESCRIPTION OF THE PREFERRED EMBODIMENT

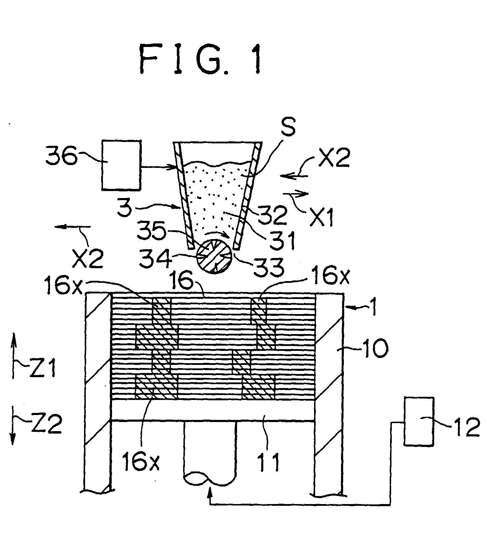

Hereinafter, a first embodiment of the present invention will be described with reference to Figs. 1 through 3. The present embodiment refers to a case where the present invention is applied to a lamination molding technique for thermally curing or solidifying a resin-coated sand with an infrared ray.

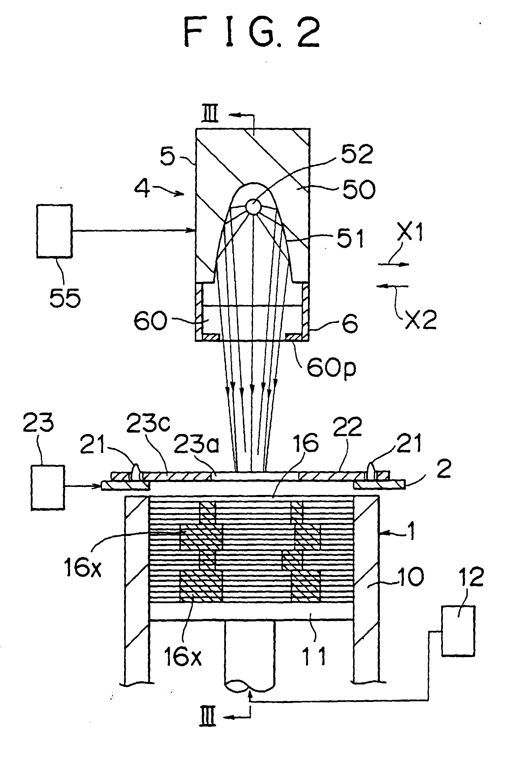

A molding device 1 is provided with a fixed frame 10, a bottom plate 11 provided elevatably to the fixed frame 10, an elevating source 12 for elevating the bottom plate 11 in height direction, that is, in directions of arrows Z1 and Z2. As shown in Fig. 2, a mask 22 is retained by a retaining pin 21 and is removably placed on a mask holder 2. When a mask drive portion 23 is driven, the mask holder 2 and the mask 22 are properly and retractably inserted in the upper portion of the fixed frame 10 of the molding device 1. The mask 22 has a light transmitting portion 23a formed with apertures which transmit the infrared ray, and an intercepting portion 23c formed with materials (metals such as aluminum alloy and copper, for example) having high infrared ray reflecting characteristic.

An application device 3 is provided with a container 32 having an accommodation chamber 31 for accommodating a resin-coated sand S serving as a solidifiable substance, a discharge port 33 provided on a bottom portion of the container 32, a cut-out roller 35 of horizontal shaft type, having a cut-out groove 34, which is rotatably provided at the discharge port 33, and a first drive portion 36 for moving the container 32 in lateral direction, that is, along the directions of arrows X1 and X2.

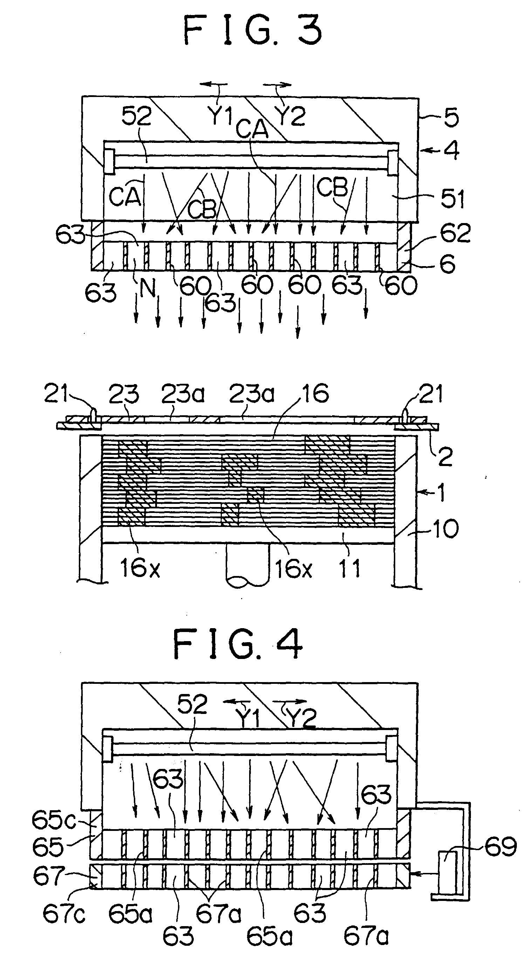

A major element 5 of an infrared light source device 4 serving as a light source device is provided with a base portion 50, a reflecting minor 51 provided on the base portion 50 which serves as a converging portion with a high reflectance, an infrared source 52 supported by the base portion 50, and a light-regulating member 6 supported by the base portion 50. The infrared source 52 has light radiation characteristic contrary to a laser beam generator which generates a laser beam with good directivity. As shown in Fig. 3, the infrared source 52 extends in one direction, that is, along the direction of arrows Y1 and Y2. Output from the infrared source 52 can be properly selected, 2 kw, for example.

As can be seen from Fig. 2, the reflecting mirror 51 is defined by a parabola having its focal point on a lower side in a cross sectional view. The reflecting mirror 51 can serve as converging means, because the reflecting mirror is capable of converging the infrared ray radiated from the infrared source 52 near the focal point thereof. As can be seen from Fig. 3, the reflecting mirror 51 has a continuous cross section in longitudinal direction of the infrared source 52, that is, in the direction along arrows Y1 and Y2.

As seen from Fig. 3, the light-regulating member 6 is provided on a side on which the infrared ray radiated from the infrared source 52 passes. The light-regulating member 6 is provided with a plurality of light-regulating plates 60 in thin plate form which are disposed in the extension direction of the infrared source 52 at substantially equal intervals, and a support portion 62 for supporting each light regulating plate 60. A space between adjacent light-regulating plates 60 is referred to as a light-regulating space 63. In the present embodiment, the light-regulating plates 60 are disposed along a vertical direction. The light-regulating plates 60 are made of materials capable of restraining reflection of the infrared ray (an aluminum thin plate treated with black alumite).

In the present embodiment, an infrared ray CA radiated from the infrared source 52 in the direction of the light-regulating plates 60 or the vertical direction can penetrate the light-regulating space 63. However, as seen from Fig. 3, an infrared ray CB radiated from the infrared source 52 in the direction of the light-regulating plates 60 or a direction diagonal to the vertical direction is intercepted by the light-regulating plates 60 of the light-regulating member 6, and therefore it cannot penetrate the light-regulating space 63. Therefore, the light-regulating member 6 has selective transmittance of the infrared ray depending on an angle of incidence, thereby giving directivity to the infrared ray.

According to the present embodiment, the smaller the width N of the light-regulating space 63 is, the more infrared ray radiated along in a direction diagonal to the light-regulating plate 60 is intercepted. Accordingly, a degree of parallelization or the directivity is improved thereby. However, due to an increase in the degree of interception of the infrared ray, a radiation energy density of the infrared ray tends to decrease. Therefore, it is preferable that the width N of the light-regulating space 63 be determined by taking into consideration such elements as how much directivity the infrared ray should have for securing the transfer accuracy by the mask 22 or how much radiation energy density of the infrared ray should be secured.

According to the present embodiment, it is preferable that the width N of the light-regulating space 63 of the light-regulating member 6 be variable. For example, a variable structure as described below may be adopted. That is, in a case of a structure wherein the light-regulating plate 60 is fitted into the retaining groove formed in the support portion 62, application of the light-regulating plate 60 on the retaining groove formed in the support portion 62 will increase the number of light-regulating plates 60, resulting in a smaller width N of the light-regulating space 63. Taking off the light-regulating plate 60 from the retaining groove formed in the support portion 62 will decrease the number of light-regulating plates 60, resulting in a larger width N of the light-regulating space 63.

Further, as shown in Fig. 2, an interception portion 60p is provided on the light-regulating member 60.

The infrared light source device 4 is capable of being moved by a second drive portion 55 at a predetermined speed (a constant speed, in general) in a lateral direction, or a direction along the arrows X1 and X2 (a direction crossing the direction of arrows Y1 and Y2 which is the direction in which the infrared source 52 extends).

Further, a lamination molding process will be described. In an application step, as can be understood from Fig. 1, the application device 3 is moved in a direction of arrow X1 by the first drive portion 36 while the cut-out roller 35 is rotating. Accordingly, the resin coated sand S is discharged from the discharge port 33 of the container 32 onto the base plate 11 or a solidified layer 16x placed on the base plate 11 in thin layers. Thus, an application layer 16 is formed. When the application is completed, the application device 3 retreats from above of the fixed frame 10.

Next, a mask application step is conducted. In the mask application step, the mask holder 2 supporting the mask 22 having a predetermined pattern is moved to above the fixed frame 10 by the mask drive portion 23. As a result, the application layer 16 is covered by the mask 22 from above.

Next, a radiation step is conducted. In the radiation step, the infrared light source device 4 is moved by the second drive portion 55 in a direction of arrow X1 at a predetermined speed in a state where the application layer 16 is covered by the mask 22. Thus, the infrared ray from the infrared light source device 4 passes through the transmitting portion 23a of the mask 22, and it is then radiated on a sand portion of the application layer 16 that faces the transmitting portion 23a of the mask 22. The irradiated sand portion is thermally cured. Therefore, sand particles adjacent to each other are integrally solidified and the solidified layer 16x is formed. On the other hand, a portion of the application layer 16 that faces an intercepting portion 23c of the mask 22 is not thermally cured, or solidified, because the infrared ray is intercepted. Therefore, this portion is removable after molding.

According to the present embodiment, the infrared source 52 extends in an elongated shape. Also, the reflecting mirror 51 has a continuous cross section in longitudinal direction of the infrared source 52, that is, in the direction along arrows Y1 and Y2. Accordingly, the infrared ray from the infrared source 52 becomes a convergence spot which extends linearly along the direction of arrows Y1 and Y2. Therefore, by moving the infrared light source device 4 in the direction of arrow X1, a direction crossing the direction of arrows Y1 and Y2 which is the extension direction of the infrared source 52, it becomes possible to irradiate substantially an entire range of the mask 22 covering the solidifying layer 16.

As mentioned above, the infrared light source device 4 retreats from above the molding device 1 when the solidified layer 16x is formed. Then, the application step is conducted again to form a next solidified layer 16x. That is, the application device 3 moves while rotating the cut-out roller 35, and the resin-coated sand S in the container 32 is discharged from the discharge port 83. As a result, a new application layer is formed on the solidified layer 16x. Subsequently, the mask application step and the radiation step are conducted similarly. By repeating such steps, a plurality of solidified layers 16x (approximately 100 to 1000 layers) are laminated in thickness direction to form a three-dimensional molded article (a mold for casting, for example).

In the present embodiment, the infrared source 52 of the infrared light source device 4 has a light radiation characteristic. Therefore, the infrared ray radiated from the infrared source 52 tends to scatter more than the laser beam, which has high directivity. Especially, because the infrared source 52 according to the present embodiment extends in an elongated shape in one direction, or in the direction of arrows Y1 and Y2, scattering occurs more in the longitudinal direction of the infrared source 52.

To cope with this point, according to the present embodiment, the light-regulating member 6 is provided on a side to which the infrared ray radiated from the infrared source 52 passes. Therefore in Fig. 3, the infrared ray CA radiated from the infrared source 52 in a direction in which the light-regulating plate 60 is orientated, or the vertical direction, can penetrate the light-regulating space 63. However, as can be seen from Fig. 3, the infrared ray CB radiated in the direction of orientation of the light-regulating plate 60, or the direction diagonal to the vertical direction, is intercepted by the light-regulating member 6, and the infrared ray CB cannot pass through the light-regulating space 63. Therefore, by the present embodiment, an infrared ray having a directivity that is higher in the direction in which the light-regulating plate 60 is oriented is obtained.

Such embodiment is advantageous in obtaining high transfer accuracy of the outline shape of the transmitting portion 23a of the mask 22 as compared to a case where high scattering of infrared ray occurs due to lack of the light-regulating member 60. In other words, accuracy of the outline shape of the surface shape of the solidified layer 16x can be improved. This leads to improvement of accuracy of the outline shape of the surface of the three-dimensional molded article.

When the radiation energy density of the infrared source 52 is low, the radiation time for thermally curing or solidifying the resin covered sand S tends to become longer. Therefore, there is a possibility of energy being transmitted to a layer underneath the application layer 16 presently being irradiated, thereby solidifying unnecessary portions of the layer underneath.

To cope with this point, according to the present embodiment, the reflecting mirror 51 capable of converging the infrared ray radiated from the infrared source 52 on the application layer 16 side is provided in the infrared light source device 4. This is advantageous in increasing the radiation energy density on the application layer 16, and therefore it is advantageous in reducing the radiation time required for solidifying. Accordingly, the above-mentioned drawback of unnecessary portions of the layer underneath being solidified can be resolved.

A second embodiment has basically the same construction as the first embodiment, and has a similar operation and effect. Hereunder, mainly the difference will be described. The second embodiment shown in Fig. 4, the light-regulating member 6 includes a first light-regulating member 65 on upper side and a second light-regulating member 67 on the lower side. The first light-regulating member 65 has a plurality of first light-regulating plates 65a in thin plate form which are disposed in the extension direction of the infrared source 52, or the direction of arrows Y1 and Y2, at a substantially same interval, and a first support portion 65c supporting each light-regulating plate 65a. The second light-regulating member 67 has a plurality of second light-regulating plates 67a in thin plate form which are disposed in the extension direction of the infrared source 52, or the direction of arrows Y1 and Y2, at a substantially same interval, and a second support portion 67c supporting each light-regulating plate 67a.

A drive portion 69 for light-regulation is capable of moving the light-regulating plate 67c of the second light-regulating member 67 relative to the light-regulating plate 65a of the first light-regulating member 65 along the direction of arrows Y1 and Y2. When the drive portion 69 for light-regulation is driven, the second light-regulating member 67 can move relative to the first light-regulating member 65 along the direction of arrows Y1 and Y2.

Therefore, according to the present embodiment, a phase of the second light-regulating plate 67a in the direction of arrows Y1 and Y2 can be displaced so that each second light-regulating plate 67a of the second light-regulating member 67 does not coincide with the first light-regulating plate 65a of the first light-regulating member 65 in the direction of arrows Y1 and Y2. In this case, the width of the light-regulating space 63 can be made small.

Also, as shown in Fig. 4, each second light-regulating plate 67a of the second regulating member 67 can be made such that it coincides with the first light-regulating plate 65a of the first light-regulating member 65. In this case, the width of the light-regulating space 63 can be made large.

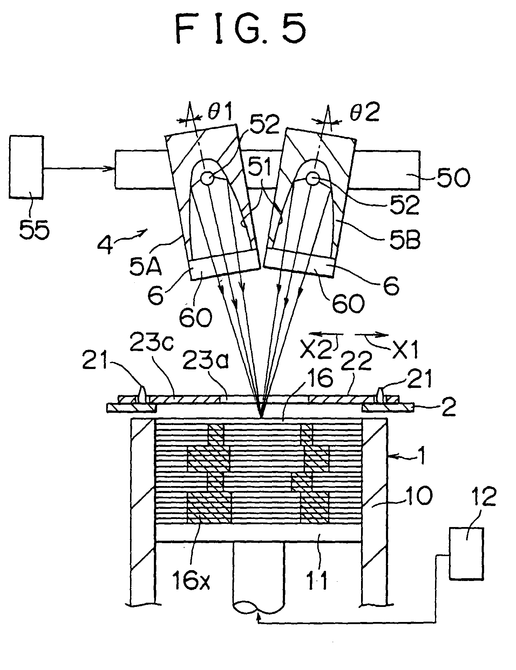

A third embodiment shown in Fig. 5 has basically the same construction as the first embodiment, and has a similar operation and effect. Hereunder, mainly the difference will be described. As mentioned above, when the light-regulating plate 60 is provided, the degree of parallelization or the directivity is improved thereby. However, due to increase in a degree of interception of the infrared ray, a radiation energy density of the infrared ray tends to decrease. In the aforementioned first embodiment, decrease in radiation energy density is restrained by convergence using a reflecting mirror 51. However, there are cases where a further increase in radiation energy density is demanded. The present embodiment is for dealing with such a situation.

According to the present embodiment, the infrared light source device 4 includes a total of two pairs of major elements 5A and 5B integrally mounted on a common base portion 50. The major elements 5A and 5B respectively have a reflecting mirror 51 which functions as converging means, an infrared source 52, and a light-regulating member 6.

In the present embodiment, a first major element 5A is inclined by angle θ1 with respect to the vertical line. A second major element 5B is inclined by angle θ2 opposite to the vertical line (=θ1). Therefore, the reflecting mirrors 51 of the major elements 5A and 5B are inclined with respect to the vertical line. Accordingly, the focal point of the reflecting mirror 51 of the first major element 5A and the focal point of the reflecting mirror 51 of the second major element 5B are set such that they coincide near the application layer 16 below the mask 22 to form a convergence spot. When the second drive portion 55 is driven, the base portion common to the major elements 5A and 5B are moved in the direction of arrows X1 and X2, and the convergence spot moves in that direction.

Because a light-regulating member 6 is provided on respective major portions 5A and 5B in the present embodiment as well, an infrared ray having directivity can be obtained.

As described earlier, the radiation time for thermally curing or solidifying the resin-covered sand S becomes long when the radiation energy density of the infrared source 52 is low. Consequently, there is a possibility of energy being transmitted to a layer underneath the application layer 16 presently being irradiated, thereby solidifying unnecessary portions of the layer underneath. To cope with this point, according to the present embodiment, the infrared light source device 4 includes two pairs of major elements 5A and 5B, and the focal points of respective reflecting mirrors 51 of the major elements 5A and 5B are set such that they are formed near the application layer 16 below the mask 22. Accordingly, the infrared rays of respective major elements 5A and 5B can be converged near the application layer. This is advantageous in increasing the radiation energy on the application layer 16, and therefore it is advantageous in reducing the radiation time required for solidifying the application layer 16. Accordingly, above-mentioned drawback of unnecessary portions of the layer underneath being solidified can be resolved.

In lamination molding technology, it is preferable that only one thickness layer of the application layer 16 be thermally cured, but not thermally curing other layers underneath. In the case of resin-covered sand using phenol resin, the radiation energy density required for thermally curing only one thickness layer of the application layer 16 should preferably be 0.2[kw/cm²] which is comparatively high. In this case, it is preferred that the radiation time be a short duration of 0.2 seconds. When the radiation energy density is lower than the above-mentioned value, the radiation time for sufficiently thermally curing the resin-coated sand S needs to be made long, If the radiation time is made longer, heat is transmitted to the layers underneath, and the layers underneath are thermally cured thereby. On the other hand, when the radiation energy density is higher than this value, a high radiation energy density is applied on the application layer 16. Consequently, only the surface of one layer of the application layer 16 is excessively thermally cured, heat not being transmitted to the inside, possibly inducing peeling.

When the characteristics of one infrared source 52 is set such the output is 2 [kw] and the length is 20 [cm], an optimum radiation energy density can be secured by the following calculation. In this case, the radiation area of the convergence spot (width: 0.2 [cm]) is 20 [cm]×0.2 [cm] = 4 [cm²]. Further, the effective output of the infrared source 52 is 2[kw]×0.4 (thermal efficiency) = 0.8[kw], supposing 0.4 as the value for thermal efficiency. Therefore, the radiation energy density α is 0.8[kw]/4[cm²] = 0.2[kw/cm²]. Therefore, in this case, only one infrared source 52 is required properly adjusting the output thereof.

However, there are cases where sufficient optimum radiation density α (=0.2 [kw/cm²]) cannot be obtained depending on the type of the infrared source. In such case, using an infrared light source device 4 having a plurality of infrared source 52, as in the present embodiment, and converging the infrared ray from the plurality of infrared sources 52 will effectively secure the radiation energy density.

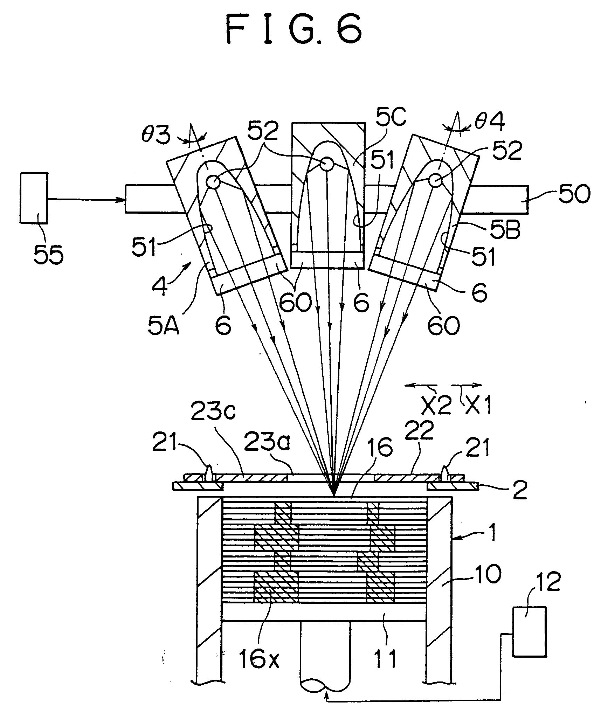

As shown in Fig. 6, a fourth embodiment has basically the same construction as the first embodiment, and has a similar operation and effect. Hereunder, mainly the difference will be described. According to the present embodiment, the aforementioned infrared light source device 4 includes a total of three pairs of major elements 5A, 5B, and 5C integrally mounted on a common base portion 50. The major elements 5A, 5B, and 5C respectively have a reflecting mirror 51, an infrared source 52, and a light-regulating member 6. Also in this embodiment, the infrared ray having directivity can be obtained, because a light-regulating member 6 is provided on respective major elements 5A, 5B, and 5C. A first major element 5A is inclined by angle θ3 with respect to the vertical line. A second major element 5B is inclined by angle θ4 opposite to the vertical line (=θ3). Therefore, the reflecting mirrors 51 of the major elements 5A and 5B are inclined with respect to the vertical line. Further, a third major element 5C is disposed along the vertical line. In such embodiment, the focal point of the reflecting mirror 51 of the first major element 5A, the focal point of the reflecting mirror 51 of the second major element 5B, and the focal point of the reflecting mirror 51 of the third major element 5C are set such that they coincide near the application layer 16 below the mask 22 to form a convergence spot.

In the present embodiment as well, when the second drive portion 55 is driven, the base portion common to the major elements 5A, 5B, and 5C are moved in the direction of arrows X1 and X2, and the convergence spot moves in that direction.

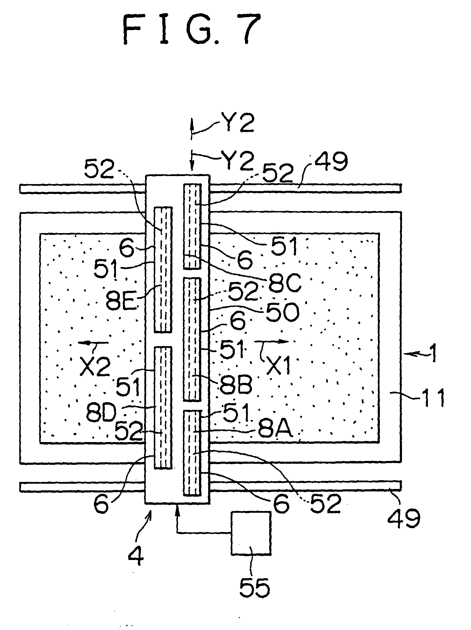

A fifth embodiment shown in Fig. 7 has basically the same construction as the first embodiment, and has a similar operation and effect. Hereunder, mainly the difference will be described. According to the present embodiment, the infrared light source device 4 includes a common base portion 50 and five pairs of major elements 8A, 8B, 8C, 8D, and 8E, mounted on a common base portion 50. That is, in the infrared light source device 4, the major elements 8A, 8B, and 8C are disposed parallel in the longitudinal direction thereof, or in the direction of arrows Y1 and Y2. The major elements 8D and 8E are disposed in parallel with respect to the major elements 8A through 8C in the width direction, or in the direction of arrows X1 and X2. Each of the major elements 8A through 8E has a reflecting mirror 51, an infrared source 52, and a light-regulating member 6.

In the present embodiment as well, the focal points of the infrared rays from the five pairs of major elements 8A through 8E constituting the infrared light source device 4 can be made to coincide to form the convergence spot.

When the second drive portion 55 is driven, the base portion 50 of the infrared light source device 4 is moved in the direction of arrows X1 and X2 along a guide member 49, and the convergence spot is moved in that direction through the mask 22.

Although the above-mentioned embodiment deals with the case with infrared light source device, the present invention may also be applied to a case with ultraviolet light source device. In that case ultraviolet hardening resin should be used as the base material for the solidifiable substance.

The foregoing description of the preferred embodiments does not limit the claimed invention and the discussed combination of features might not be absolutely necessary for the inventive solution.

## Claims

1. A light source device comprising a light source (52) having a radiation characteristic and a light regulating member (6) having a plurality of light-regulating spaces provided side-by-side on the side on which a light radiated from the light source passes, characterized in that:
the light-regulating member (6) is capable of increasing a directivity of the light radiated from the light source.

2. The light source device according to claim 1, wherein the light source (52) is an infrared light source.

3. The light source device according to claim 1, wherein the light source (52) is an ultraviolet light source.

4. A lamination molding method for forming a three-dimensional molded article comprising the steps of:
employing, as a radiation energy source, a light source device having a light source (52) having a radiation characteristic; and
increasing the directivity of the light radiated from the light source using a light-regulating member (6) having a plurality of light-regulating spaces provided side-by-side on a side on which a light radiated from the light source passes.

5. The lamination molding method according to claim 4;
wherein the light source (52) of the light source device is either an infrared or an ultraviolet light source.

6. The lamination molding method according to claim 4;
wherein the light source device includes a convergence portion for converging light in the vicinity of the solidifiable substance.

7. The lamination molding of claim 4 further comprising the step of:
forming a solidified layer (16x) by irradiating a solidifiable substance with a radiation energy from the radiation energy source.

8. The lamination molding method of claim 7 further comprising:
laminating the solidified layers in a thickness direction.

9. A lamination molding method for forming a three-dimensional molded article comprising the steps of:
converging rays radiated from a plurality of light sources (52);
forming a solidified layer (16x) by irradiating a solidifiable substance with the converged rays; and
laminating a plurality of solidified layers in a thickness direction.

10. A light source device comprising:
a plurality of light sources (52); and
a converging means for converging rays radiated from the plurality of light sources (52), wherein the converged rays are capable of solidifying a solidifiable substance into a solidified layer (16x).
